# EUROPEAN PATENT APPLICATION

(11) **EP 4 518 189 A1**
(43) Date of publication of application: **05.03.2025**
(21) Application number: 23194449.7
(22) Date of filing: 31.08.2023
(51) Int. Cl.: H04B 7/185, H04W 84/06

(54) **METHOD FOR OPERATING A USER EQUIPMENT CONNECTED TO A MOBILE COMMUNICATION NETWORK AND/OR FOR OPERATING A MOBILE COMMUNICATION NETWORK, SYSTEM OR TELECOMMUNICATIONS NETWORK, USER EQUIPMENT, PROGRAM AND COMPUTER-READABLE MEDIUM**

(71) Applicant: Deutsche Telekom AG, 53113 Bonn (DE)
(72) Inventor: COLOM IKUNO, Josep, 2100 Korneuburg (AT); LAUSTER, Reinhard, 3100 St. Pölten (AT)
(74) Representative: Schwöbel, Thilo K.

(57) **Abstract**

The present invention relates to a method for operating a user equipment connected to a mobile communication network and/or for operating a mobile communication network,
wherein the mobile communication network comprises an access network,
wherein the mobile communication network comprises a control plane function controlling data packet forwarding of user plane data packets that are transmitted, in uplink and/or in downlink direction, between the user equipment and the mobile communication network,
wherein the mobile communication network comprises at least one aggregation node and a plurality of satellite nodes for the processing of user plane data packets,
wherein the processing of user plane data packets involves a packet processing mapping function, and a local packet processing function, wherein each satellite node comprises a local packet processing function,
wherein, in order
-- to realize transmission of user plane data packets, in uplink or in downlink direction, between the user equipment and the mobile communication network, and/or in order
-- to control transmission of such user plane data packets,
the method comprises the step of the packet processing mapping function and the local packet processing function interacting via a first interface or reference point on the control plane and via a second interface or reference point on the user plane.

## Description

### BACKGROUND

The present invention relates a method for operating a user equipment connected to a mobile communication network and/or for operating a mobile communication network, wherein the mobile communication network comprises an access network, wherein the mobile communication network comprises a control plane function controlling data packet forwarding of user plane data packets that are transmitted, in uplink and/or in downlink direction, between the user equipment and the mobile communication network.

Furthermore, the present invention relates to a system or to a telecommunications network for operating a user equipment connected to a mobile communication network and/or for operating the mobile communication network, wherein the mobile communication network comprises an access network, wherein the mobile communication network comprises a control plane function controlling data packet forwarding of user plane data packets that are transmitted, in uplink and/or in downlink direction, between the user equipment and the mobile communication network.

Furthermore, the present invention relates to a corresponding user equipment as well as to a program and to a computer-readable medium for operating a telecommunications network and/or a user equipment according to the inventive method.

The present invention relates to the area of telecommunications networks, especially wireless telecommunications networks or mobile communication networks. Such conventionally known telecommunications networks or mobile communication networks, typically comprise (or are, at least, assigned to or related to) a core network, or core network components, as well as a (radio) access network, wherein the (radio) access network typically comprises a plurality of base station entities.
Additionally, mobile communication networks typically comprise control plane functions (typically associated with the core network or core network components of the mobile communication network) that are controlling the data packet forwarding of user plane data packets; such user plane data packets typically being transmitted, between the user equipment and the mobile communication network, both in uplink as well as in downlink direction.
In case that base station entities - or, at least, parts or components thereof - are, at least partly, non-stationary, challenges may arise regarding both control plane communication as well as regarding user plane communication.

In the exemplary case of non-terrestrial networks (i.e. where satellites and/or high-altitude platforms are used - at least as a part of the access network - such as to provide functionalities (or part thereof) of base station entities to user equipments connected to the mobile communication network), it might be the case that radio links to user terminals (or user equipments) have quality restrictions based on used frequencies and satellite constellations (i.e. low/high LEO (low-earth orbit satellites), MEO (medium-earth orbit satellites), GEO (geostationary-earth orbit satellites); also dynamic aspects like weather have to be considered. Besides the limitation of bandwidth, the most important quality-of-service restriction is the higher latency compared to terrestrial networks, as well as the mobility of the satellite-based elements, which requires frequent traffic re-routing and/or re-anchoring. For signaling (i.e. for control plane communication), in most cases such latency restrictions will not have impact on user service quality, but for user data (i.e. control plane communication), such increased latency is a big limitation and should be reduced as much as possible.
Additionally, the SAT-ground station feeder links (i.e. feeder links for satellites or high-altitude platforms) are as critical in aspects of frequencies, bandwidth and the related quality of data services. These ground stations are in the routing between user terminals (user equipments), satellite(s) and ground-based network elements, such as the core network, and might double the latency of user data in case of data being routed through such ground stations; the worst case regards user (equipment) to user (equipment) data exchange via ground stations where four times the typical latency of the satellite radio link in addition to the delay of terrestrial infrastructure can lead to unacceptable roundtrip delays.
Furthermore, current satellite systems, especially LEO constellations, cannot rely on the availability of a feeder link for each satellite. It is possible to provide indirect access to a feeder link by means of satellite-to-satellite links. While the bandwidth available for satellite-to-satellite links is typically of a higher order of magnitude to that of the feeder link (e.g. laser-based communication as opposed to radio-based communications), if an additional satellite-to-satellite link is needed to reach a SAT-ground station, the latency of user data is additionally increased compared to the case where the feeder link is directly available.
Therefore, an optimized user plane routing, especially regarding intra- and inter-satellite communication, is required.

### SUMMARY

An object of the present invention is to provide an effective and simple approach for operating a user equipment connected to a mobile communication network and/or for operating a mobile communication network, wherein the mobile communication network comprises a control plane function controlling data packet forwarding of user plane data packets that are transmitted, in uplink and/or in downlink direction, between the user equipment and the mobile communication network, and wherein the mobile communication network comprises at least one aggregation node and a plurality of satellite nodes for the processing of such user plane data packets, wherein the processing of such user plane data packets is able to be realized comparatively easy and in an efficient manner. A further object of the present invention is to provide a corresponding user equipment, a corresponding system or mobile communication network, and a corresponding program and computer-readable medium.

The object of the present invention is achieved by a method for operating a user equipment connected to a mobile communication network and/or for operating a mobile communication network, wherein the mobile communication network comprises an access network, wherein the mobile communication network comprises a control plane function controlling data packet forwarding of user plane data packets that are transmitted, in uplink and/or in downlink direction, between the user equipment and the mobile communication network, wherein the mobile communication network comprises at least one aggregation node and a plurality of satellite nodes for the processing of user plane data packets, wherein the processing of user plane data packets involves a packet processing mapping function, and a local packet processing function, wherein each satellite node comprises a local packet processing function, wherein, in order
-- to realize transmission of user plane data packets, in uplink or in downlink direction, between the user equipment and the mobile communication network, and/or in order
-- to control transmission of such user plane data packets, the method comprises the step of the packet processing mapping function and the local packet processing function interacting via a first interface or reference point on the control plane and via a second interface or reference point on the user plane.

It is thereby advantageously possible, according to the present invention, that the packet processing mapping function and the local packet processing function are interacting both on the control plane and on the user plane such that the complexity of the different satellite nodes (especially regarding their dynamical behavior and spatial pattern with respect to the aggregation node) is able to be hidden from the control plane (function) of the core network (especially from the session management function), such that changes between (or among) satellite nodes (especially regarding their spatial relationship and/or their dynamically evolving spatial pattern, e.g. the movement of satellites) are hidden behind an abstraction layer provided by the packet processing mapping function.
Hence, the core network or its components, especially the control plane function (such as the session management function), and, as well, the data network are able to be realized (or operated) in a manner that is non-satellite(-node)-aware, whereas the aggregation node (and, of course, the satellite nodes) are satellite(-node)-aware.

Thus, according to the present invention, a split of the user plane architecture is proposed, such that:
-- control plane complexity towards the core network is minimized;
-- current mobile telecommunication networks can be adapted to use the optimized user plane data routing in an optimal way;
-- the usage of feeder links is minimized by providing
   -- local routing on satellites for both voice and data calls;
   -- inter-satellite data routing
-- and reduced user plane latency is possible by means of the optimized user plane data routing.

According to the present invention, it is advantageously possible and preferred that the mobile communication network comprises a non-terrestrial network part, especially as part of the access network or the access network being or corresponding to a non-terrestrial network,
wherein especially the mobile communication network comprises, besides the access network, a core network,
wherein especially the at least one aggregation node is part of the access network, wherein especially either the at least one aggregation node, or the core network, comprises the packet processing mapping function.

According to the present invention, it is thereby advantageously possible that the inventive method is able to be performed in a flexible and efficient manner.

According to the present invention, it is furthermore advantageously possible and preferred that for realizing transmission of user plane data packets and/or for controlling such transmission,
the method further comprises at least a part of the following steps:
-- a specific control plane function sends a packet processing rule or command to a specific packet processing mapping function,
-- the specific packet processing mapping function maps the packet processing rule or command to one or more further packet processing rules or commands and/or the further packet processing rules or commands are associated to one or more of the local packet processing functions,
-- each of the further packet processing rules are sent to each of the associated local packet processing functions.

According to the present invention, it is thereby advantageously possible that the inventive method is able to be performed in a flexible and efficient manner.

According to the present invention, it is furthermore advantageously possible and preferred that the mobile communication network comprises a plurality of network functions or services providing at least the functionality of a session management function and of a user plane function,
wherein especially the control plane function provides at least part of the functionality of the session management function and wherein the packet processing mapping function and the local packet processing functions provide at least part of the functionality of the user plane function,
wherein especially the functionality of the user plane function is partly located at the at least one aggregation node and at the plurality of satellite nodes, wherein the at least one aggregation node is especially located at a ground station and wherein the plurality of satellite nodes are especially located onboard of satellites or high-altitude platforms.

According to the present invention, it is thereby advantageously possible that the inventive method is able to be performed in a flexible and efficient manner.

According to the present invention, it is furthermore advantageously possible and preferred that the control plane function controls data packet forwarding of user plane data packets that are transmitted, in uplink and/or in downlink direction, between the user equipment and the mobile communication network, wherein the control plane function interacts, with the packet processing mapping function, via an interface or reference point, especially an N4 interface or reference point, especially based on the PFCP protocol,
wherein especially the control plane function exclusively interacts with packet processing mapping function, and wherein especially the control plane function does not interact, at least not directly interact, with the local packet processing function.

According to the present invention, it is thereby advantageously possible that the inventive method is able to be performed in a flexible and efficient manner.

According to the present invention, it is furthermore advantageously possible and preferred that the at least one aggregation node and the plurality of satellite nodes are arranged according to a spatial pattern, the spatial pattern especially being a dynamically changing spatial pattern,
wherein, by means of the specific packet processing mapping function mapping the packet processing rule or command - received from the control plane function - to one or more further packet processing rules or commands and/or to one or more of the local packet processing functions, the further packet processing rules or commands reflect the spatial pattern without the packet processing rule or command being required to reflect the spatial pattern.

According to the present invention, it is thereby advantageously possible that the inventive method is able to be performed in a flexible and efficient manner.

Furthermore, the present invention relates to a system or to a telecommunications network for operating a user equipment connected to a mobile communication network and/or for operating the mobile communication network, wherein the mobile communication network comprises an access network, wherein the mobile communication network comprises a control plane function controlling data packet forwarding of user plane data packets that are transmitted, in uplink and/or in downlink direction, between the user equipment and the mobile communication network, wherein the mobile communication network comprises at least one aggregation node and a plurality of satellite nodes for the processing of user plane data packets, wherein the processing of user plane data packets involves a packet processing mapping function, and a local packet processing function, wherein each satellite node comprises a local packet processing function, wherein, in order
-- to realize transmission of user plane data packets, in uplink or in downlink direction, between the user equipment and the mobile communication network, and/or in order
-- to control transmission of such user plane data packets,
the system of mobile communication network is configured such that the packet processing mapping function and the local packet processing function interact via a first interface or reference point on the control plane and via a second interface or reference point on the user plane

Furthermore, the present invention relates to a user equipment for being operated with (or as part of, or connected to) an inventive system or an inventive mobile communication network.

Additionally, the present invention relates to a program comprising a computer readable program code which, when executed on a computer or on an aggregation node or on a satellite node or on a packet processing mapping function or on a local packet processing function, and/or in part on an aggregation node and/or in part on a satellite node and/or in part on a packet processing mapping function and/or in part on a local packet processing function, causes the computer or the aggregation node or the satellite node or the packet processing mapping function or the local packet processing function, to perform the inventive method.

Still additionally, the present invention relates to a computer-readable medium comprising instructions which, when executed on a computer or on an aggregation node or on a satellite node or on a packet processing mapping function or on a local packet processing function, and/or in part on an aggregation node and/or in part on a satellite node and/or in part on a packet processing mapping function and/or in part on a local packet processing function, causes the computer or the aggregation node or the satellite node or the packet processing mapping function or the local packet processing function, to perform the inventive method.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

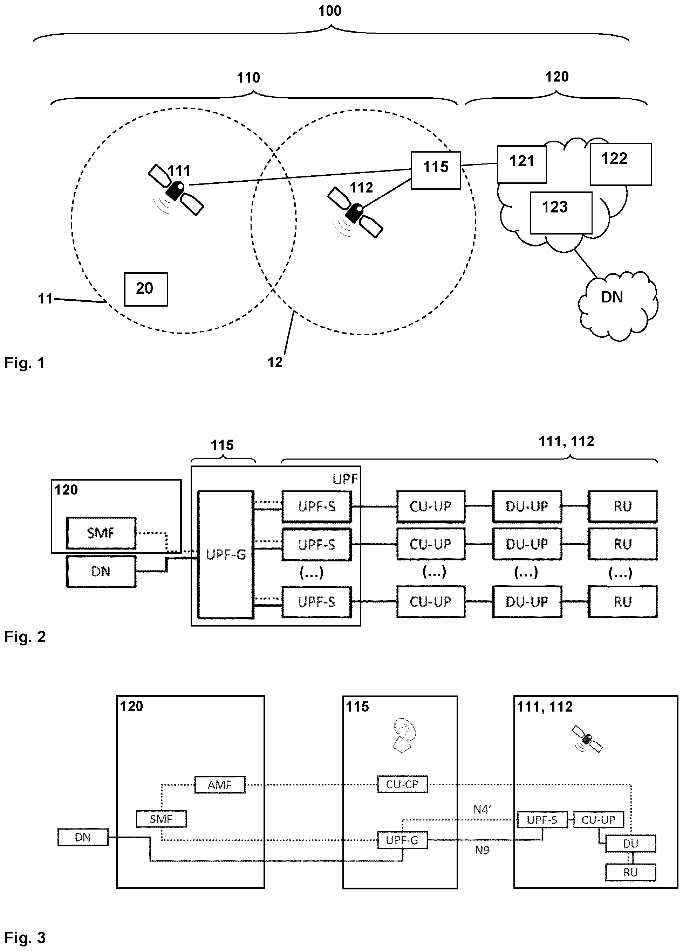

Figure 1 schematically illustrates a telecommunications network comprising an access network, a core network and a user equipment, wherein the core network typically comprises a number of network functions or services, and wherein the (radio) access network likewise comprises a number of base station entities, wherein the base station entities are schematically shown to be non-stationary, i.e. to provide, respectively, radio coverage for specific geographical areas at given times and for other geographical areas at other times.
Figure 2 schematically illustrates an example showing different functionalities of the at least one aggregation node and a plurality of satellite nodes of the mobile communication network in a manner such that for the processing of user plane data packets, a packet processing mapping function, and a local packet processing function is used, wherein typically each one of the satellite nodes comprises a local packet processing function.

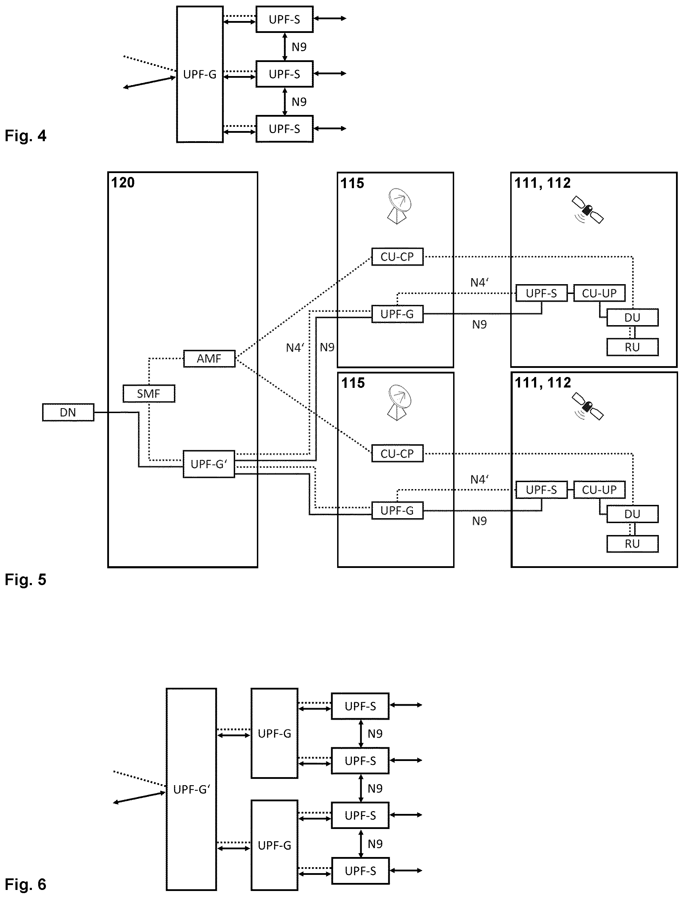

Figures 3 and 4 schematically illustrate an exemplary setup or realization of an architecture of a mobile communication network being implemented according to the present invention.
Figures 5 and 6 schematically illustrate another exemplary setup or realization of an architecture of a mobile communication network being implemented according to the present invention.

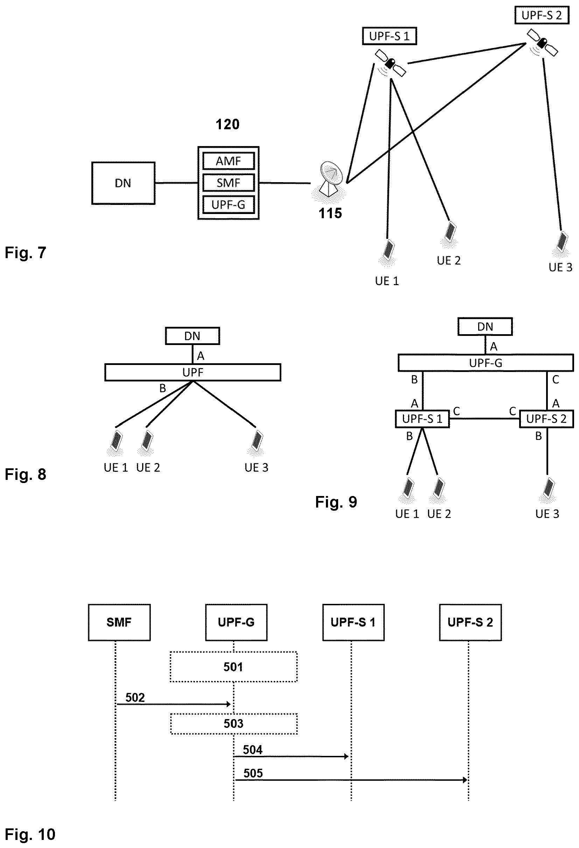

Figure 7 schematically shows an exemplarily deployment with two satellites and three user equipments, and details the disaggregation of the packet processing flow, wherein Figure 8 schematically shows interfaces on a packet processing functionality as seen by the respective control plane function (external view of the packet processing functionality), and wherein Figure 9 schematically shows interfaces on the packet processing functionality as seen by the packet processing mapping function (internal view of the packet processing functionality).
Figure 10 schematically illustrates - regarding the exemplary deployment shown in Figure 7 - an example of a mapping of a packet processing rule (e.g. a packet detection rule, PDR), regarding one of the user equipments, between the packet processing mapping function and the local packet processing functions.

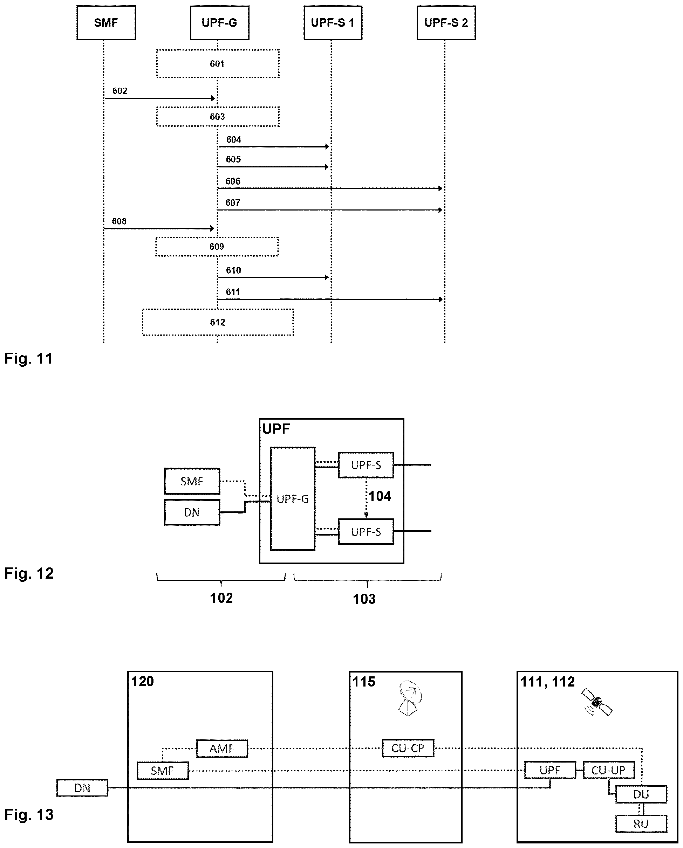

Figure 11 schematically illustrates - regarding the exemplary deployment shown in Figure 7 - a further example of a mapping of a packet processing rule (e.g. a forwarding action rule, FAR), regarding the user equipments and regarding a data network, between the packet processing mapping function and the local packet processing functions.
Figure 12 schematically illustrates the inventive architecture of the packet processing functionality according to the present invention, especially regarding a dynamic change among the local packet processing functions regarding serving different user equipments, thereby providing for a complexity abstraction related to this dynamic change among the local packet processing functions.
Figures 13 to 15 schematically illustrate different architectures regarding different functionalities of aggregation nodes and satellite nodes being realized in conventionally known mobile communication networks.

### DETAILED DESCRIPTION

The present invention will be described with respect to particular embodiments and with reference to certain drawings but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

In Figure 1, a telecommunications network 100 comprising an access network 110, and a core network 120 is schematically shown. The telecommunications network 100 or also mobile communication network 100 is typically realized as a cellular network or cellular mobile communication network 100. The telecommunications network 100, especially the core network 120, typically comprises a number of network functions or services 121, 122, 123. Examples of such network functions or services 121, 122, 123 include, e.g., a session management function, SMF, an access and mobility management function, AMF, and/or a user plane function, UPF - especially in case of a 5G telecommunications network, in which case the core network 120 might also be called a 5G core (system) and the access network 110 or radio access network 110 a next-generation radio access network, NG-RAN.
As is realized in conventionally known mobile communication networks, also according to the present invention, the (radio) access network 110 of the mobile communication network 100 comprises a number of base station entities 111, 112. Especially according to the present invention, and schematically shown in Figure 1, such base station entities 111, 112 are, at least partly, non-stationary, i.e. such base station entities 111, 112 are typically moving with regard to the earth surface, and, hence, with regard to respective user equipments they are serving. Thereby, the base station entities 111, 112, respectively, provide radio coverage for specific geographical areas at given times (or given points in time) and for other geographical areas at other times; however, this dynamic aspect is not shown in Figure 1.
The access network 110 comprises (at each of such different times or points in time) a plurality of radio cells 11, 12, typically one or a plurality thereof regarding each one of the base station entities 111, 112. In the exemplary situation or scenario shown in Figure 1, a first base station entity 111 generates or is associated with or spans (at a respective point in time) the first radio cell 11, and a second base station entity 112 generates or is associated with or spans (at the respective point in time) the second radio cell 12. The base station entities 111, 112 typically realize gNB functionality or next-generation gNB functionality. The telecommunications network 100 is typically connected to a plurality of user equipments 20 (or, rather, the user equipments 20 are connected to the telecommunications network 100), one of which is schematically shown in Figure 1. As is conventionally known, also according to the present invention, user plane data packets are transmitted, in uplink and/or in downlink direction, between the user equipment 20 and the mobile communication network 100. Of course, in addition to such user plane communication, also control plane communication is performed between the different nodes (of the core and/or access networks 120, 110) of the mobile communication network 100. In view of such user plane communication (but also in view of control plane communication) between components or elements (or nodes) of the mobile communication network 100, especially - in case of the mobile communication network 100 using non-terrestrial network infrastructure - between ground-based infrastructure elements and non-terrestrial (non-ground-based) infrastructure elements, the mobile communication network 100 comprises at least one aggregation node 115 (also called ground station) and a plurality of satellite nodes 111, 112 (also called non-terrestrial nodes or stations).
In Figure 1 - and for the sake of simplicity of schematically representing the overall architecture of the mobile communication network 100 -, the base station entities 111, 112 are shown to be realized aboard the non-terrestrial infrastructure elements, such as satellites or high-altitude platforms; however, the functionality of base station entities or gNBs 111, 112 (or, rather, the functionalities thereof) might be split among different entities, e.g. - realizing a disaggregation of radio access nodes or base station entity functionality in a thus disaggregated radio access network 110 - the gNB (or base station entity) is able to be split into a central (or centralized) unit (CU or gNB-CU) functionality and a distributed unit (DU or gNB-DU) (with an F1 interface or reference point between the gNB centralized unit and the gNB distributed unit). Additionally, the gNB centralized unit might be split up in a gNB centralized unit control plane (CU-CP) and a gNB centralized unit user plane (CU-UP) - with an E1 interface or reference point in between. It is possible that one gNB or base station entity comprises two (or more) distributed units (or gNB distributed units), wherein each of these distributed units is, respectively, connected to the gNB centralized unit control plane (CU-CP) by means of an F1-C (F1 control plane) interface or reference point, and to the gNB centralized unit user plane (CU-UP) by means of an F1-U (F1 user plane) interface or reference point. Likewise, the gNB distributed unit might also be split up into a control plane entity (DU-CP) and a user plane entity (DU-UP). Furthermore, the gNB distributed unit (especially the gNB distributed unit user plane (DU-UP) might comprise (or be connected to) one radio unit (RU) or a plurality thereof. Further elements of a disaggregated radio access network 110 might comprise at least one of the following local or physical nodes: A non-Realtime Radio Intelligent Controller (non-RT RIC) or a near-Realtime Radio Intelligent Controller (NearRT-RIC) - especially such nodes or entities according to the respective O-RAN specification.

According to the present invention, a method for operating a user equipment 20 (being connected to a mobile communication network 100) and/or for operating a mobile communication network 100 is proposed. The mobile communication network 100 comprises an access network 110, and a control plane function (often a session management function) controlling data packet forwarding of user plane data packets that are transmitted, in uplink and/or in downlink direction, between the user equipment 20 and the mobile communication network 100 - such transmission typically involving specific network functions or services (such as, but not necessarily, user plane function entities or functionalities) that are actually handling the user plane data packet forwarding and that are, however, controlled by the respective control plane function. Furthermore, the mobile communication network 100 comprises at least one aggregation node 115 and a plurality of satellite nodes 111, 112 for the processing of user plane data packets (and/or of control plane messages or data packets).

Figure 2 schematically illustrates an example showing different functionalities of the at least one aggregation node 115 and the plurality of satellite nodes 111, 112 of the mobile communication network 100 in a manner such that for the processing of user plane data packets, a packet processing mapping function UPF-G, and a local packet processing function UPF-S is used (or, rather, a plurality of local packet processing functions UPF-S are used) - especially, but not necessarily, as part of a user plane function UPF -, wherein typically each one of the satellite nodes 111, 112 comprises a local packet processing function UPF-S (and, additionally, at least a (gNB) centralized unit user plane CU-UP, a (gNB) distributed unit user plane DU-UP, and a radio unit RU). This architecture according to the present invention advantageously provides the possibility - in order to realize transmission of user plane data packets, in uplink or in downlink direction, between the user equipment 20 and the mobile communication network (100), and/or in order to control transmission of such user plane data packets - that the packet processing mapping function UPF-G and the local packet processing function UPF-S interact both on the control plane and on the user plane, i.e. via a first interface or reference point (called N4' in the context of the present invention) on the control plane and via a second interface or reference point (especially corresponding to the conventionally known N9 interface or reference point, typically used between user plane function elements or components) on the user plane.

According to a preferred embodiment of the present invention, it is advantageously possible that the same protocol stack can be used on the N4' interfaces as on N4 interfaces (e.g. packet forwarding control protocol, PFCP), such that packet processing rules or commands (especially comprising PDRs, FARs, QERs, URRs, BAR and/or MAR, i.e. packet detection rules (PDRs), forwarding action rules (FARs), quality-of-service enforcement rules (QERs), usage reporting rules (URRs), buffering action rules (BARs), multi access rules (MARs)) can be exchanged between a packet processing mapping function UPF-G, and a local packet processing function UPF-S.
It is furthermore advantageously possible and preferred that the N9 protocol stack can be used (e.g. general packet radio services tunneling Protocol, GTP), in order for user plane to be exchanged between a packet processing mapping function UPF-G, and a local packet processing function UPF-S.
Hence, it is advantageously possible to implement the inventive method in an efficient way such that protocol conversion between a packet processing mapping function UPF-G, and a local packet processing function UPF-S is not required.
Figure 2 also schematically and exemplarily shows a session management function SMF, and a data network DN being either part of the mobile communication network 100 and/or (at least) connected to the mobile communication network 100, especially as part of the core network 120 - especially to the at least one aggregation node 115. Regarding the plurality of the local packet processing functions UPF-S schematically shown in Figure 2, the packet processing mapping function UPF-G serves as interface towards the network nodes of the core network 120, and each local packet processing function UPF-S is shown as being connected to one (gNB) centralized unit user plane CU-UP, each (gNB) centralized unit user plane CU-UP is shown as being connected to one (gNB) distributed unit user plane DU-UP, and each (gNB) distributed unit user plane DU-UP is shown as being connected to one radio unit RU. A drawn-through line connecting two such nodes or entities is meant to indicate a user plane connection, and a dotted line connecting two such nodes or entities is meant to indicate a control plane connection.

By means the packet processing mapping function UPF-G and the local packet processing function UPF-S interacting both on the control plane and on the user plane (via the first and second interfaces or reference points and thereby the packet processing mapping function providing a complexity abstraction among the local packet processing functions) it is advantageously possible, according to the present invention, to provide the following benefits:
The complexity of the different satellite nodes 111, 112 (especially regarding their dynamical behavior with respect to the aggregation node 115) is able to be hidden from the control plane of the core network 120 (especially from the session management function, SMF), such that changes between (or among) satellite nodes 111, 112 (especially regarding their spatial relationship and/or their dynamically evolving spatial pattern, e.g. the movement of satellites and the resulting need to use different satellites over time to serve a given user equipment) are hidden behind an abstraction layer. This can be stated differently such that the core network 120 or its components, especially the control plane function SMF (such as the session management function), and, as well, the data network DN are able to be realized (or operated) in a manner that is non-satellite(-node)-aware, whereas the aggregation node 115 (and, of course, the satellite nodes 111, 112) are satellite(-node)-aware.
Furthermore, this architecture advantageously allows for local routing between user equipments 20 in (or served by) the same satellite node 111, 112.
Additionally, it is advantageously possible to provide a comparatively easy support for inter-satellite data routing (especially of user plane data routing), such that traffic needs not travel via the feeder link (i.e. via the aggregation node 115 or ground station).
Furthermore, it is advantageously possible according to the present invention to avoid - regarding the number of associations (and the resulting complexity) that the core network 120 needs to maintain, especially in view of a non-terrestrial network having a considerable number of non-static satellites (and, hence, satellite nodes 111, 112) - a number of such associations of the order of the number of satellite nodes (or satellites) deployed and their related user equipments.
Furthermore, the architecture and method according to the present invention is compatible with the principles of packet processing flow applied in conventionally known mobile communication networks.

According to the present invention, it is especially proposed to provide a disaggregation of the function providing (or handling) the processing of user plane data packets - typically performed, in 5G systems or 5G mobile communication networks, by a user plane function UPF - into two functions or sub-functions, namely the local packet processing function UPF-S (or UPF-Sat or UPF-Satellite) and the packet processing mapping function UPF-G (or UPF-Ground).
The local packet processing function UPF-S is typically deployed on the satellite node 111, 112 (especially literally aboard a satellite or high-altitude platform) and provides local user plane routing between user equipments on the same satellite node 111, 112. Furthermore, it provides inter-satellite node 111, 112 user plane routing to reach user equipments on other satellite nodes 111, 112 (or satellites).
The packet processing mapping function UPF-G exposes - to the control plane function SMF, typically a session management function in a 5G system (and as well to the further components, nodes or elements of the core network 120 and/or to data networks DN) - the same configuration and complexity as in cases (of conventionally known mobile communication networks) where the user plane function is realized as part of the core network; this is schematically represented in Figures 13 to 15 which schematically illustrate different architectures regarding different functionalities of aggregation nodes and satellite nodes being realized in conventionally known mobile communication networks.
According to the present invention, the packet processing mapping function UPF-G is either deployed in the core network 120 or in the ground station (or aggregation node 115). Especially in case that the packet processing mapping function UPF-G is deployed in the ground station (or aggregation node 115): According to a variant of the present invention, the packet processing mapping function UPF-G (or, a central packet processing mapping function UPF-G') can additionally be applied on top of other instances (or nodes) of packet processing mapping functions UPF-G, such that the same kind of abstraction (UPF-G') can be applied for each ground station or feeder Link (i.e. the structure, dynamics and/or spatial pattern of the ground stations (and their packet processing mapping functions UPF-G) is hidden to the control plane function SMF (typically a session management function in a 5G system; and as well to the further components such as data networks DN); this has the additional advantage that changes between ground stations can also be abstracted).
Especially according to the present invention, the packet processing mapping function UPF-G is provided with location and satellite-related information, especially relating to the spatial dynamics of the satellite nodes 111, 112; in case of actual satellites or high-altitude platforms, this, e.g., relates to the satellite orbits and/or ephemeris data or information.
Furthermore according to the present invention, the packet processing mapping function UPF-G especially provides - and maintains - a mapping between the (UPF) configuration provided by the core network 120 (i.e. especially the control plane function SMF) and the (UPF) configuration deployed on the local packet processing function UPF-S instances it manages.

As briefly mentioned, Figures 13 to 15 schematically illustrate different architectures regarding different functionalities of aggregation nodes 115 and satellite nodes 111, 112 in conventionally known mobile communication networks. All Figures 13 to 15 represent the core network 120, the (or an) aggregation node 115 and (one of) the satellite nodes 111, 112; the different architectures represented in these Figures refer to different functionality splits based on conventionally known mobile communication networks.
In addition to Figures 13 to 15, such splits of functionalities (among the core network 120, the aggregation node 115 and the satellite nodes 111, 112) might comprise architectures (not shown in the figures) where the user plane function UPF completely resides in the core network and where the functionality split among the core network 120, the aggregation node 115 and the satellite nodes 111, 112 (regardless of being a 3GPP or O-RAN-based split) is purely based on a redistribution of radio access network components (i.e. CU-CP/CU-UP among the aggregation node 115 and/or the satellite nodes 111, 112); however, all such architectures have the drawback that traffic routing can only be performed at the packet data unit session anchor (PDU session anchor, PSA). Hence, all user plane traffic has to be routed to the user plane function UPF via the feeder link, i.e. towards the core network.
Especially, a split is undesirable where both the (gNB) centralized unit control plane CU-CP and the (gNB) centralized unit user plane CU-UP is located in the satellite nodes 111, 112: This requires the core network 120 to have as many associations of the N2 interface or reference point (N2 associations) as there are satellites nodes 111, 112 and it nullifies the capacity of the centralized unit CU to aggregate control over several distributed units (DUs).
In order to improve such a situation, and especially in order to keep the complexity of the radio access network under the control of the radio access network, the architectures shown in Figures 13 to 15 have been proposed, where the (gNB) centralized unit control plane CU-CP is located at most at the aggregation node or ground station 115, such that the complexity of the satellite nodes 111, 112 (their number and their dynamical spatial relationships and pattern) is abstracted by the gNB centralized unit CU (e.g. at a granularity level of Tracking Area changes and not on the level of the radio cell). Again, also in Figures 13 to 15, a drawn-through line connecting two nodes or entities is meant to indicate a user plane connection, and a dotted line connecting two such nodes or entities is meant to indicate a control plane connection.
In all of Figures 13 to 15, the core network 120 comprises the access and mobility management function AMF, and the session management function SMF. The access and mobility management function AMF is connected to the (gNB) centralized unit control plane CU-CP that is located in the aggregation node 115 (or ground station 115). Furthermore, in all Figures 13 to 15, the (gNB) distributed unit user plane CU-UP (as well as the (gNB) distributed unit DU and the radio unit RU) is located at the satellite nodes 111, 112.

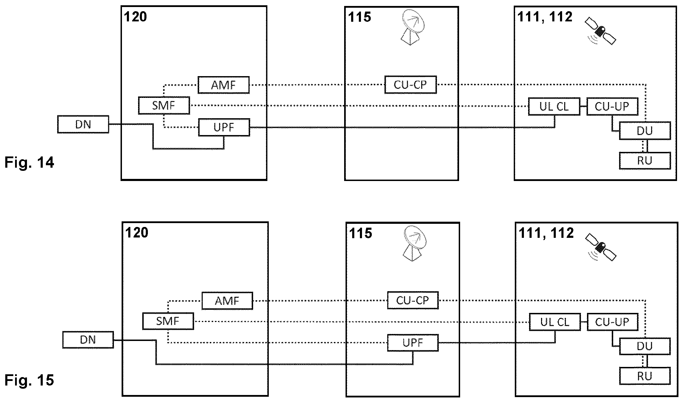

Figure 13 shows an architecture where the user plane function UPF (i.e. the packet data unit session anchor, PSA) is placed in the satellite nodes 111, 112, whereas Figures 14 and 15 show an architecture where an uplink classifier UL CL is placed in the satellite nodes 111, 112 and the user plane function UPF is placed in the core network 120 (Figure 14) or in the aggregation node or ground station 115 (Figure 15), both cases resulting in the possibility to keep the PDU session anchor PSA at the ground (i.e. either in the core network 120 or in the aggregation node or ground station 115). The uplink classifier (UL CL) is a functionality supported by a user plane function UPF that aims at diverting (locally) some traffic matching traffic filters provided by the session management function.
In all of Figures 13 to 15, the data network DN is connected to the network node realizing the functionality of the user plane function. However and regarding all of Figures 13 to 15, the main issue with functionality splits placing a core network user plane function (CN UPF) on a satellite node is that the session management function directly steers all of either the UPF (Figure 13) or all of the uplink classifiers (UL CLs) deployed on satellite nodes; with such a setup, the session management function is burdened with the following tasks:
-- in a setup according to Figure 13: each time a user equipment 20 changes the satellite node (especially with low earth orbit satellite constellations, this will happen quite often e.g., every several minutes), the session management function has to relocate the PSA and re-setup the N3 tunnels on a different PSA on another satellite (node) and another CU-UP, which also requires communicating with the CU-CP. This is a complex task involving a significant amount of signaling and would need to be done constantly. Furthermore, the session management function would need to maintain a N4 association with each satellite.
-- furthermore, in a setup according to Figures 14 or 15, a similar problem occurs, just that in this case, the session management function has to directly manage each uplink classifier UL CL instead of the PSA UPF and explicitly insert/remove each UL CL continuously such that the PSA is located at the satellite serving the user equipment. However, control plane elements that are conventionally known and used in mobile communication networks are not designed to handle very fast, continuous changes of the user plane anchor in an efficient way; hence, such an approach would require a complete redesign of all of the control plane components involved in session management.

Hence, according to the present invention, it is proposed to use the packet processing mapping function UPF-G that serves as interface towards the network nodes of the core network 120. By means the packet processing mapping function UPF-G and the local packet processing function UPF-S interacting both on the control plane and on the user plane (via the first and second interfaces or reference points and thereby the packet processing mapping function providing a complexity abstraction among the local packet processing functions) it is advantageously possible to hide the complexity of the different satellite nodes 111, 112 from the control plane of the core network 120, especially from the control plane function SMF that especially is or corresponds to a session management function; hence, the core network 120 or its components is non-satellite(-node)-aware, whereas the aggregation node 115 and the packet processing mapping function UPF-G is satellite(-node)-aware.

Figures 3 and 4 schematically illustrate an exemplary setup or realization of an architecture of a mobile communication network 100 being implemented according to the present invention, i.e. wherein the processing of user plane data packets involves the packet processing mapping function UPF-G, and the local packet processing function UPF-S, and wherein - especially in contrast to the representations shown in Figures 13 to 15 - the packet processing mapping function UPF-G and the local packet processing function UPF-S are interacting via the first interface or reference point N4' on the control plane and via a second interface or reference point N9 on the user plane.
As shown in Figure 3, the core network 120 comprises the access and mobility management function AMF, and the control plane function SMF in order to control the processing of user plane data packets, i.e. especially a session management function SMF. The access and mobility management function AMF is connected to the (gNB) centralized unit control plane CU-CP that is located in the aggregation node 115 (or ground station 115). Furthermore, as in Figures 13 to 15, the (gNB) distributed unit user plane CU-UP (as well as the (gNB) distributed unit DU and the radio unit RU) is located at the satellite nodes 111, 112.
As shown in Figure 3, according to the present invention, the mobile communication network 100 comprises the packet processing mapping function UPF-G (especially, but not necessarily, as part of the ground station 115 or aggregation node 115; the packet processing mapping function UPF-G could, alternatively, also be located as part of the core network 120). The data network DN is connected to the packet processing mapping function UPF-G, i.e. the network node realizing the functionality of the user plane function (seen from the perspective of the core network 120 and/or from the perspective of the data network DN. Again, also with regard to Figure 3, a drawn-through line connecting two nodes or entities is meant to indicate a user plane connection, and a dotted line connecting two such nodes or entities is meant to indicate a control plane connection. Hence, the deployment according to the present invention comprises a control plane link between the packet processing mapping function UPF-G and the local packet processing function UPF-S is shown as N4', while the user plane link uses the N9 interface or reference point.
Figure 4 specifically illustrates the interfaces between the packet processing mapping function UPF-G and the local packet processing function UPF-S in detail: In order to support inter-satellite links, additional N9 links exist between different instances of the local packet processing function UPF-S deployed on different satellite nodes 111, 112 and are able to provide inter-satellite routing capability; hence, according to the present invention it is advantageously possible to provide inter-satellite routing based on the disaggregation of the user plane function functionality involving the packet processing mapping function UPF-G and the local packet processing function UPF-S.

Especially in case that the packet processing mapping function UPF-G is deployed in the ground station (or aggregation node 115) and in case that a plurality of ground stations or aggregation nodes 115 exist within the mobile communication network 100, the packet processing mapping function UPF-G (or, a central packet processing mapping function UPF-G') can additionally be applied on top of other instances (or nodes) of packet processing mapping functions UPF-G; this is schematically shown in Figure 5 for the case of two ground stations 115 (or aggregation nodes 115) being present:
Again, the core network 120 comprises the access and mobility management function AMF, and the control plane function SMF in order to control the processing of user plane data packets, i.e. especially a session management function SMF. The (central) access and mobility management function AMF is connected, respectively, to the (gNB) centralized unit control plane CU-CP that is located, respectively, in each one of the aggregation nodes 115 (or ground stations 115). Again, the (gNB) distributed unit user plane CU-UP (as well as the (gNB) distributed unit DU and the radio unit RU) is located at the satellite nodes 111, 112.
As mentioned, the packet processing mapping function UPF-G located in the core network 120 serves as central packet processing mapping function UPF-G', and is connected, to respective packet processing mapping functions UPF-G located in each of the ground stations 115. The data network DN is connected to the central packet processing mapping function UPF-G', and also with regard to Figure 5, a drawn-through line connecting two nodes or entities is meant to indicate a user plane connection, and a dotted line connecting two such nodes or entities is meant to indicate a control plane connection. The deployment according to the present invention and according to the variant shown in Figure 5, thus comprises an additional control plane link between the central packet processing mapping function UPF-G' and each one of the packet processing mapping function UPF-G of the different aggregation nodes 115 or ground stations 115 (this additional control plane link also being indicated by means of reference sign N4'). Likewise, an additional user plane link exists between the central packet processing mapping function UPF-G' and each one of the packet processing mapping function UPF-G of the different aggregation nodes 115 or ground stations 115 (this additional user plane link also being indicated by means of reference sign N9).
Furthermore, between the respective packet processing mapping function UPF-G of each one of the ground stations or aggregation nodes 115 and the respective local packet processing function UPF-S of the connected satellite nodes 111, 112, the same architecture and connections are realized as described with respect to Figure 3.
By means of the architecture shown in Figure 5, it is advantageously possible according to the present invention that the same kind of abstraction (as between a packet processing mapping function UPF-G and local packet processing functions UPF-S) can be applied between the core network 120 and each ground station or feeder Link (i.e. between the central packet processing mapping function UPF-G' and each packet processing mapping function UPF-G of a ground station 115). This provides the possibility that the structure, dynamics and/or spatial pattern of the ground stations 115 is able to be hidden to the control plane function SMF (typically a session management function in a 5G system; and as well to the further components such as data networks DN).

In a manner analogously to Figure 4, Figure 6 illustrates the interfaces between the central packet processing mapping function UPF-G' and the packet processing mapping function UPF-G as well as between the packet processing mapping function UPF-G and the local packet processing function UPF-S in detail, i.e. involving multiple abstraction layers, e.g. to support multiple ground stations or aggregation nodes 115: Again, in order to support inter-satellite links, additional N9 links exist between different instances of the local packet processing function UPF-S deployed on different satellite nodes 111, 112 and are able to provide inter-satellite routing capability; hence, according to the present invention it is advantageously possible to provide inter-satellite routing based on the disaggregation of the user plane function functionality involving the packet processing mapping function UPF-G and the local packet processing function UPF-S.

The architecture of the inventive mobile communication network 100 according to all embodiments and variants of the present invention is able to be characterized as follows:
-- local routing on satellite nodes 111, 112 is possible, hence reducing usage of the feeder link and satellite-to-satellite links,
-- local routing between satellite nodes 111, 112 is possible, hence further reducing usage of the feeder link,
-- the number of associations relating to or implementing the N2 interface or reference point of the access and mobility management function AMF is (only) of the order of the number of ground stations or aggregation nodes 115 (and advantageously not of the order of the number of satellite nodes 111, 112),
-- the number of associations relating to or implementing the N3 interface or reference point of the packet data unit session anchor PSA is (only) of the order of the number of ground stations or aggregation nodes 115 (and advantageously not of the order of the number of satellite nodes 111, 112),
-- the number of associations relating to or implementing the N4 interface or reference point of the control plane function SMF is (only) of the order of the number of ground stations or aggregation nodes 115 and/or of the order of the number of packet data unit session anchors PSA (and advantageously not of the order of the number of satellite nodes 111, 112),
-- the feeder link use regarding the control plane is of the order of twice the number of satellite nodes 111, 112 and involves the N4' interface or reference point,
-- the feeder link use regarding the user plane is of the order of the number of satellite nodes 111, 112 and involves the N9 interface or reference point.

Figure 7 schematically shows an exemplarily deployment with two satellites (indicated by means of reference signs UPF-S1 and UPF-S2) and three user equipments (indicated by means of reference signs UE1, UE2, UE3), and details the disaggregation of the packet processing flow, wherein Figure 8 schematically shows interfaces (marked A, B) on a packet processing functionality as seen by the respective control plane function (external view of the packet processing functionality), and wherein Figure 9 schematically shows interfaces (marked A, B, C) on the packet processing functionality (UPF-G, UPF-S1, UPF-S2) as seen by the packet processing mapping function (internal view of the packet processing functionality).

Hence, according to the present invention, a disaggregation of packet processing flow is advantageously possible and shown in Figure 7: The data network DN is connected to the core network 120 comprising the access and mobility management function AMF, the packet processing mapping function UPF-G as well as the control plane function SMF (especially a session management function). The core network 120 is connected to the aggregation node 115 or ground station 115, and between the ground station 115 and the satellites UPF-S1 and UPF-S2 respective feeder links exist or are established. Between the satellites UPF-S1 and UPF-S2, a satellite-to-satellite link exist or is established. From the point of view of the control plane function SMF, the three user equipments UE1, UE2, UE3 are anchored on a user plane function. The control plane function SMF does not see any satellite-related particularities and can manage/steer the packet processing flow as usual.
Figure 8 exemplarily (and in a simplified manner) depicts the user plane function's interfaces - as seen from the perspective of the control plane function SMF according to the present invention -, such that reference sign "A" is able to be mapped to the N6 interface type and reference sign "B" to the access interface type; however, this mapping does not simply relate to interfaces but rather involves a series of parameters.
Figure 9 exemplarily (and, again, in a simplified manner) depicts the internal view, i.e. the interface of the user plane function as seen from the perspective of the packet processing mapping function UPF-G, and especially shows interfaces for the packet processing mapping function UPF-G and local packet processing function UPF-S instances, including both feeder links and satellite-to-satellite links.
The packet processing mapping function UPF-G thus manages a mapping between the external and internal views. That is, it maps to/from
-- the requested packet processing, i.e. requested by the control plane function SMF comprising (especially comprising PDRs , FARs , QERs , URRs , BAR and/or MAR, i.e. packet detection rules (PDRs), forwarding action rules (FARs), quality-of-service enforcement rules (QERs), usage reporting rules (URRs), buffering action rules (BARs), multi access rules (MARs)) that the control plane function SMF deploys to the user plane function (from the perspective of the control plane function SMF), and
-- the actual rules deployed on the packet processing mapping function UPF-G and/or the local packet processing function UPF-S.
Additionally, in order to validate the links between the different components, a heartbeat QoS measurements between local packet processing functions UPF-S and/or packet processing mapping functions UPF-G is advantageously possible to provide according to the present invention.

Figure 10 schematically illustrates - regarding the exemplary deployment shown in Figure 7 - an example of a mapping of a packet processing rule (e.g. a packet detection rule, PDR), regarding user equipment UE1, between the control plane function SMF, the packet processing mapping function UPF-G and the local packet processing functions UPF-S1, UPF-S2: The example represented in Figure 10 refers to the mapping for a Packet Detection Rule (PDR) detecting incoming traffic from user equipment UE1: In a first processing step 501, the location of user equipment UE1 (i.e. the user equipment UE1 being connected to the satellite corresponding to local packet processing function UPF-S1) is known from its registration, ephemeris and/or orbit data, or the like. In a second processing step 502, the control plane function SMF transmits a PDR (packet detection rule) for user equipment UE1 to the packet processing mapping function UPF-G (with the indication that UE1 is to be detected on interface "B" and with data relating to UE1).
In a third processing step 503, the packet processing mapping function UPF-G, maps to interface "B" on local packet processing function UPF-S1; this comprises the following fourth, and fifth processing steps 504, 505:
In the fourth processing step 504, the packet processing mapping function UPF-G transmits - to the local packet processing function UPF-S1 - the PDR for UE1 with the indication that UE1 is to be detected on interface "B" (of local packet processing function UPF-S1) and with data relating to UE1.
In the fifth processing step 505, the packet processing mapping function UPF-G transmits - to the local packet processing function UPF-S2 - the PDR for UE1 with the indication that UE1 is to be detected on interface "C" (of local packet processing function UPF-S2) and with data relating to UE1.
Hence, using mobility information and combined with ephemeris information (typically, the mobile communication network 100 is able to know with which satellite each user equipment is registered and can also predict the coverage over time, such that it is known which satellite will overtake a specific user equipment an which point in time), the packet processing mapping function UPF-G knows which satellite is tasked with which user equipment over time; the control plane function SMF configures (as seen from its perspective) the user plane function to set a PDR, such that traffic from user equipment UE1 is received on interface "B" (in this exemplary case, this reflects uplink traffic, which would use an interface of a type "Access"). The packet processing mapping function UPF-G then maps this rule to inner rule(s), namely, in this case:
UE1 is on satellite 1, i.e. local packet processing function UPF-S1 receives its uplink data: A PDR for interface "B" is required to detect incoming traffic from user equipment UE1, and local packet processing function UPF-S2 may receive data from user equipment UE1 from the satellite-to-satellite link, i.e. on interface "C"; hence a PDR for interface "C" is required to detect (at local packet processing function UPF-S2) incoming traffic from user equipment UE1. The packet processing mapping function UPF-G configures local packet processing functions UPF-S1 and UPF-S2 with the generated, mapped rules, such that - as seen by the control plane function SMF -, they perform the same PDR as requested by the control plane function SMF.

Figure 11 schematically illustrates - regarding the exemplary deployment shown in Figure 7 - a further example of a mapping of a packet processing rule (e.g. a forwarding action rule, FAR), regarding the user equipments UE1, UE2 and regarding a data network, between the control plane function SMF, the packet processing mapping function UPF-G and the local packet processing functions UPF-S1, UPF-S2: The example represented in Figure 11 depicts the mapping of a forwarding action rule (FAR) to route (forward) local traffic between user equipments and also traffic towards the data network DN:
In a first processing step 601, the location of user equipments UE1, UE2, UE3 is known from its registration and/or orbit data, or the like.
In a second processing step 602, the control plane function SMF transmits a FAR (forwarding action rule) for traffic between user equipments UE1, UE2, and UE3 to be locally routed to the packet processing mapping function UPF-G (with the indication that these user equipments are to be detected on interface "B" - at least from the perspective of the control plane function SFM cf. Figure 8).
In a third processing step 603, the packet processing mapping function UPF-G maps the FAR to the respective interface on the respective local packet processing functions UPF-S1, UPF-S2; this comprises the following fourth, fifth, sixth, and seventh processing steps 604, 605, 606, 607:
In the fourth processing step 604, the packet processing mapping function UPF-G transmits - to the local packet processing function UPF-S1 - the FAR for user equipments UE1 and UE2 with the indication that, regarding these user equipments local routing should be performed on interface "B" (of local packet processing function UPF-S1).
In the fifth processing step 605, the packet processing mapping function UPF-G transmits
- to the local packet processing function UPF-S1 - the FAR for user equipment UE3 with the indication that, regarding user equipment UE3 inter-satellite routing should be performed on interface "C" (of local packet processing function UPF-S1).
In the sixth processing step 606, the packet processing mapping function UPF-G transmits - to the local packet processing function UPF-S2 - the FAR for user equipment UE3 with the indication that, regarding user equipment UE3 local routing should be performed on interface "B" (of local packet processing function UPF-S2).
In the seventh processing step 607, the packet processing mapping function UPF-G transmits - to the local packet processing function UPF-S2 - the FAR for user equipments UE1 and UE2 with the indication that, regarding these user equipments inter-satellite routing should be performed on interface "C" (of local packet processing function UPF-S2).
In an eighth processing step 608, the control plane function SMF transmits a FAR (forwarding action rule) for traffic directed towards the the data network DN to the packet processing mapping function UPF-G (with the indication that such traffic is to be forwarded on interface "A" - at least from the perspective of the control plane function SFM cf. Figure 8).
In a nineth processing step 609, the packet processing mapping function UPF-G maps the FAR to the respective interface on the respective local packet processing functions UPF-S1, UPF-S2; this comprises the following tenth, and eleventh processing steps 610, 611:
In the tenth processing step 610, the packet processing mapping function UPF-G transmits - to the local packet processing function UPF-S1 - the FAR for the data network DN with the indication that such traffic should be forwarded on interface "A" (of local packet processing function UPF-S1).
In the eleventh processing step 611, the packet processing mapping function UPF-G transmits - to the local packet processing function UPF-S2 - the FAR for the data network DN with the indication that such traffic should be forwarded on interface "A" (of local packet processing function UPF-S2).
In a twelfth processing step 612, the packet processing mapping function UPF-G sets a PDR for traffic of the data network DN from interfaces "B" and "C" to a FAR for traffic of the data network DN on interface "A".
Hence, regarding such a mapping of FARs between the packet processing mapping function UPF-G and the local packet processing function UPF-S, the control plane function SMF instructs the UPF (i.e. from its perspective, i.e. of the SMF) to route traffic between user equipments locally (often, mobile networks do not allow inter-UE traffic) while also allowing connectivity towards the data network DN. That is, that traffic between the user equipments UE 1, UE 2 and UE 3 should be directly routed (it is also possible to alternatively describe this setup by defining a 5G virtual network (VN) group composed of user equipments that can communicate with each other), to which user equipments are added) by the (as seen by the SMF) user plane function. The mapping, based on current locations of the user equipments (cf. Figure 7) is composed of the following components:
-- UPF-S 1:
   -- Traffic from UE 1 to UE 2 (and vice versa) can be locally routed;
   -- Traffic from UE 1 or UE 2 towards UE 3 can be efficiently routed via the satellite-to-satellite link on interface C towards UPF-S2;
-- UPF-S2:
   -- Traffic arriving on interface C for UE 3 can be locally routed
   -- Traffic from UE 3 to UE 1 or UE 2 can be efficiently routed via the satellite-to-satellite link on interface C
The UPF-G configures UPF-S1 and UPF-S2 with the generated, mapped rules, such that as seen by the SMF, they perform the same PDR as requested in the second processing step 602
In order to also allow traffic to flow to the DN, the SM instructs the UPF to forward non-local traffic towards the DN
The mapping to local packet forwarding rules implies that:
-- Both for UPF-S1 and UPF-S2, traffic towards the DN is to be forwarded via the interface towards the feeder link (in this case, for both UPF-S, that is interface A (In this case, both UPF-S 1 and UPF-S 2 have a "interface B" towards the feeder link)
-- For traffic coming from the feeder link(s) and directed to the DN, the UPF-B should forward the traffic to the DN via interface A
The UPF-G configures UPF-S 1 and UPF-S 2, as well as UPF-G, with the generated, mapped rules, such that as seen by the SMF, they perform the same PDR as requested in the eighth processing step 608.

Figure 12 schematically illustrates the inventive architecture of the packet processing functionality according to the present invention, especially regarding a dynamic change among the local packet processing functions regarding serving different user equipments, thereby providing for a complexity abstraction related to this dynamic change among the local packet processing functions.
The proposed method has the advantage that complexity related to the satellites can be hidden from the control plane function SMF, such that existing control plane functions can be used to manage satellite-based user plane with efficient user plane delivery.
In order to transfer a user equipment from one satellite to another, the packet processing mapping function UPF-G, fulfilling its role of abstraction layer, can steer a context transfer from a local packet processing function UPF-S instance to another local packet processing function UPF-S instance located on another satellite as needed - and all this is not requiring any change from control plane function SMF side. While the mapping between the packet forwarding instructed by the control plane function SMF has changed, the N3 association(s) and packet forwarding as seen by the control plane function SMF are kept unchanged.
According to the present invention, there is the possibility to exchange rule information 104 - e.g. regarding PDR and/or FAR rules - between different local packet processing function UPF-S instances, and regarding the left side (cf. reference sign 102) of the packet processing mapping function UPF-G (as shown in Figure 12), no change occurs on a satellite switch of a user equipment (i.e. from one satellite to another satellite), whereas regarding the right hand side (cf. reference sign 103) of the packet processing mapping function UPF-G, a context switch and/or transfer occurs upon a satellite change (being internal to the user plane function UPF).

## Claims

1. Method for operating a user equipment (20) connected to a mobile communication network (100) and/or for operating a mobile communication network (100), wherein the mobile communication network (100) comprises an access network (110),
wherein the mobile communication network (100) comprises a control plane function (SMF) controlling data packet forwarding of user plane data packets that are transmitted, in uplink and/or in downlink direction, between the user equipment (20) and the mobile communication network (100),
wherein the mobile communication network (100) comprises at least one aggregation node (115) and a plurality of satellite nodes (111, 112) for the processing of user plane data packets,
wherein the processing of user plane data packets involves a packet processing mapping function (UPF-G), and a local packet processing function (UPF-S), wherein each satellite node (111, 112) comprises a local packet processing function (UPF-S),
wherein, in order
-- to realize transmission of user plane data packets, in uplink or in downlink direction, between the user equipment (20) and the mobile communication network (100), and/or in order
-- to control transmission of such user plane data packets,
the method comprises the step of the packet processing mapping function (UPF-G) and the local packet processing function (UPF-S) interacting via a first interface or reference point (N4') on the control plane and via a second interface or reference point (N9) on the user plane.

2. Method according to claim 1, wherein the mobile communication network (100) comprises a non-terrestrial network part, especially as part of the access network (110) or the access network (110) being or corresponding to a non-terrestrial network,
wherein especially the mobile communication network (100) comprises, besides the access network (110), a core network (120),
wherein especially the at least one aggregation node (115) is part of the access network (110),
wherein especially either the at least one aggregation node (115), or the core network (120), comprises the packet processing mapping function (UPF-G).

3. Method according to one of the preceding claims, wherein for realizing transmission of user plane data packets and/or for controlling such transmission,
the method further comprises at least a part of the following steps:
-- a specific control plane function (SMF) sends a packet processing rule or command to a specific packet processing mapping function (UPF-G),
-- the specific packet processing mapping function (UPF-G) maps the packet processing rule or command to one or more further packet processing rules or commands and/or the further packet processing rules or commands are associated to one or more of the local packet processing functions (UPF-S),
-- each of the further packet processing rules are sent to each of the associated local packet processing functions (UPF-S).

4. Method according to one of the preceding claims, wherein the mobile communication network (100) comprises a plurality of network functions or services providing at least the functionality of a session management function and of a user plane function,
wherein especially the control plane function (SMF) provides at least part of the functionality of the session management function and wherein the packet processing mapping function (UPF-G) and the local packet processing functions (UPF-S) provide at least part of the functionality of the user plane function,
wherein especially the functionality of the user plane function is partly located at the at least one aggregation node (115) and at the plurality of satellite nodes (111, 112), wherein the at least one aggregation node (115) is especially located at a ground station and wherein the plurality of satellite nodes (111, 112) are especially located onboard of satellites or high-altitude platforms.

5. Method according to one of the preceding claims, wherein the control plane function (SMF) controls data packet forwarding of user plane data packets that are transmitted, in uplink and/or in downlink direction, between the user equipment (20) and the mobile communication network (100),
wherein the control plane function (SMF) interacts, with the packet processing mapping function (UPF-G), via an interface or reference point, especially an N4 interface or reference point, especially based on the PFCP protocol, wherein especially the control plane function (SMF) exclusively interacts with packet processing mapping function (UPF-G), and wherein especially the control plane function (SMF) does not interact, at least not directly interact, with the local packet processing function (UPF-S).

6. Method according to one of the preceding claims, wherein the at least one aggregation node (115) and the plurality of satellite nodes (111, 112) are arranged according to a spatial pattern, the spatial pattern especially being a dynamically changing spatial pattern,
wherein, by means of the specific packet processing mapping function (UPF-G) mapping the packet processing rule or command - received from the control plane function (SMF) - to one or more further packet processing rules or commands and/or to one or more of the local packet processing functions (UPF-S), the further packet processing rules or commands reflect the spatial pattern without the packet processing rule or command being required to reflect the spatial pattern.

7. Method according to one of the preceding claims, wherein the same control plane and/or user plane protocol stack is used between:
-- the packet processing mapping function (UPF-G) and the local packet processing function (UPF-S), and
-- the specific control plane function (SMF) and the packet processing mapping function (UPF-G)

8. System or telecommunications network (100) for operating a user equipment (20) connected to a mobile communication network (100) and/or for operating the mobile communication network (100), wherein the mobile communication network (100) comprises an access network (110),
wherein the mobile communication network (100) comprises a control plane function (SMF) controlling data packet forwarding of user plane data packets that are transmitted, in uplink and/or in downlink direction, between the user equipment (20) and the mobile communication network (100),
wherein the mobile communication network (100) comprises at least one aggregation node (115) and a plurality of satellite nodes (111, 112) for the processing of user plane data packets,
wherein the processing of user plane data packets involves a packet processing mapping function (UPF-G), and a local packet processing function (UPF-S), wherein each satellite node (111, 112) comprises a local packet processing function (UPF-S),
wherein, in order
-- to realize transmission of user plane data packets, in uplink or in downlink direction, between the user equipment (20) and the mobile communication network (100), and/or in order
-- to control transmission of such user plane data packets,
the system of mobile communication network (100) is configured such that the packet processing mapping function (UPF-G) and the local packet processing function (UPF-S) interact via a first interface or reference point (N4') on the control plane and via a second interface or reference point (N9) on the user plane.

9. User equipment (20) for being operated with or as part of or connected to a system or a mobile communication network (100) according to claim 8 and/or for being used in a method according to one of claims 1 to 76.

10. Program comprising a computer readable program code which, when executed on a computer or on an aggregation node (115) or on a satellite node (111, 112) or on a packet processing mapping function (UPF-G) or on a local packet processing function (UPF-S), and/or in part on an aggregation node (115) and/or in part on a satellite node (111, 112) and/or in part on a packet processing mapping function (UPF-G) and/or in part on a local packet processing function (UPF-S), causes the computer or the aggregation node (115) or the satellite node (111, 112) or the packet processing mapping function (UPF-G) or the local packet processing function (UPF-S), to perform a method according one of claims 1 to 7.

11. Computer-readable medium comprising instructions which, when executed on a computer or on an aggregation node (115) or on a satellite node (111, 112) or on a packet processing mapping function (UPF-G) or on a local packet processing function (UPF-S), and/or in part on an aggregation node (115) and/or in part on a satellite node (111, 112) and/or in part on a packet processing mapping function (UPF-G) and/or in part on a local packet processing function (UPF-S), causes the computer or the aggregation node (115) or the satellite node (111, 112) or the packet processing mapping function (UPF-G) or the local packet processing function (UPF-S), to perform a method according one of claims 1 to 7.

## Amended claims

### Amended claims in accordance with Rule 137(2) EPC.

1. Method for operating a user equipment (20) connected to a mobile communication network (100) and/or for operating a mobile communication network (100), wherein the mobile communication network (100) comprises an access network (110),
wherein the mobile communication network (100) comprises a control plane function (SMF) controlling data packet forwarding of user plane data packets that are transmitted, in uplink and/or in downlink direction, between the user equipment (20) and the mobile communication network (100),
wherein the mobile communication network (100) comprises at least one aggregation node (115) and a plurality of satellite nodes (111, 112) for the processing of user plane data packets,
wherein the processing of user plane data packets involves a packet processing mapping function (UPF-G), and a local packet processing function (UPF-S), wherein each satellite node (111, 112) comprises a local packet processing function (UPF-S),
wherein, in order
-- to realize transmission of user plane data packets, in uplink or in downlink direction, between the user equipment (20) and the mobile communication network (100), and/or in order
-- to control transmission of such user plane data packets,
the method comprises the step of the packet processing mapping function (UPF-G) and the local packet processing function (UPF-S) interacting via a first interface or reference point (N4') on the control plane and via a second interface or reference point (N9) on the user plane, wherein the control plane function (SMF) exclusively interacts with packet processing mapping function (UPF-G), and wherein the control plane function (SMF) does not interact, at least not directly interact, with the local packet processing function (UPF-S).

2. Method according to claim 1, wherein the mobile communication network (100) comprises a non-terrestrial network part, especially as part of the access network (110) or the access network (110) being or corresponding to a non-terrestrial network,
wherein especially the mobile communication network (100) comprises, besides the access network (110), a core network (120),
wherein especially the at least one aggregation node (115) is part of the access network (110),
wherein especially either the at least one aggregation node (115), or the core network (120), comprises the packet processing mapping function (UPF-G).

3. Method according to one of the preceding claims, wherein for realizing transmission of user plane data packets and/or for controlling such transmission, the method further comprises at least a part of the following steps:
-- a specific control plane function (SMF) sends a packet processing rule or command to a specific packet processing mapping function (UPF-G),
-- the specific packet processing mapping function (UPF-G) maps the packet processing rule or command to one or more further packet processing rules or commands and/or the further packet processing rules or commands are associated to one or more of the local packet processing functions (UPF-S),
-- each of the further packet processing rules are sent to each of the associated local packet processing functions (UPF-S).

4. Method according to one of the preceding claims, wherein the mobile communication network (100) comprises a plurality of network functions or services providing at least the functionality of a session management function and of a user plane function,
wherein especially the control plane function (SMF) provides at least part of the functionality of the session management function and wherein the packet processing mapping function (UPF-G) and the local packet processing functions (UPF-S) provide at least part of the functionality of the user plane function, wherein especially the functionality of the user plane function is partly located at the at least one aggregation node (115) and at the plurality of satellite nodes (111, 112), wherein the at least one aggregation node (115) is especially located at a ground station and wherein the plurality of satellite nodes (111, 112) are especially located onboard of satellites or high-altitude platforms.

5. Method according to one of the preceding claims, wherein the control plane function (SMF) controls data packet forwarding of user plane data packets that are transmitted, in uplink and/or in downlink direction, between the user equipment (20) and the mobile communication network (100),
wherein the control plane function (SMF) interacts, with the packet processing mapping function (UPF-G), via an interface or reference point, especially an N4 interface or reference point, especially based on the PFCP protocol.

6. Method according to one of the preceding claims, wherein the at least one aggregation node (115) and the plurality of satellite nodes (111, 112) are arranged according to a spatial pattern, the spatial pattern especially being a dynamically changing spatial pattern,
wherein, by means of the specific packet processing mapping function (UPF-G) mapping the packet processing rule or command - received from the control plane function (SMF) - to one or more further packet processing rules or commands and/or to one or more of the local packet processing functions (UPF-S), the further packet processing rules or commands reflect the spatial pattern without the packet processing rule or command being required to reflect the spatial pattern.

7. Method according to one of the preceding claims, wherein the same control plane and/or user plane protocol stack is used between:
-- the packet processing mapping function (UPF-G) and the local packet processing function (UPF-S), and
-- the specific control plane function (SMF) and the packet processing mapping function (UPF-G)

8. System or telecommunications network (100) for operating a user equipment (20) connected to a mobile communication network (100) and/or for operating the mobile communication network (100), wherein the mobile communication network (100) comprises an access network (110),
wherein the mobile communication network (100) comprises a control plane function (SMF) controlling data packet forwarding of user plane data packets that are transmitted, in uplink and/or in downlink direction, between the user equipment (20) and the mobile communication network (100),
wherein the mobile communication network (100) comprises at least one aggregation node (115) and a plurality of satellite nodes (111, 112) for the processing of user plane data packets,
wherein the processing of user plane data packets involves a packet processing mapping function (UPF-G), and a local packet processing function (UPF-S), wherein each satellite node (111, 112) comprises a local packet processing function (UPF-S),
wherein, in order
-- to realize transmission of user plane data packets, in uplink or in downlink direction, between the user equipment (20) and the mobile communication network (100), and/or in order
-- to control transmission of such user plane data packets,
the system of mobile communication network (100) is configured such that the packet processing mapping function (UPF-G) and the local packet processing function (UPF-S) interact via a first interface or reference point (N4') on the control plane and via a second interface or reference point (N9) on the user plane, wherein the control plane function (SMF) exclusively interacts with packet processing mapping function (UPF-G), and wherein the control plane function (SMF) does not interact, at least not directly interact, with the local packet processing function (UPF-S).

9. User equipment (20) for being operated with or as part of or connected to a system or a mobile communication network (100) according to claim 8 and/or for being used in a method according to one of claims 1 to 7.

10. Program comprising a computer readable program code which, when executed on a computer or on an aggregation node (115) or on a satellite node (111, 112) or on a packet processing mapping function (UPF-G) or on a local packet processing function (UPF-S), and/or in part on an aggregation node (115) and/or in part on a satellite node (111, 112) and/or in part on a packet processing mapping function (UPF-G) and/or in part on a local packet processing function (UPF-S), causes the computer or the aggregation node (115) or the satellite node (111, 112) or the packet processing mapping function (UPF-G) or the local packet processing function (UPF-S), to perform a method according one of claims 1 to 7.

11. Computer-readable medium comprising instructions which, when executed on a computer or on an aggregation node (115) or on a satellite node (111, 112) or on a packet processing mapping function (UPF-G) or on a local packet processing function (UPF-S), and/or in part on an aggregation node (115) and/or in part on a satellite node (111, 112) and/or in part on a packet processing mapping function (UPF-G) and/or in part on a local packet processing function (UPF-S), causes the computer or the aggregation node (115) or the satellite node (111, 112) or the packet processing mapping function (UPF-G) or the local packet processing function (UPF-S), to perform a method according one of claims 1 to 7.
